## Europäisches Patentamt
## European Patent Office
## Office européen des brevets

(11) Veröffentlichungsnummer: **0 293 625 B1**

(12) **EUROPÄISCHE PATENTSCHRIFT**

(45) Veröffentlichungstag der Patentschrift: **11.12.91**

(51) Int. Cl.⁵: **B65G 17/06**

(21) Anmeldenummer: **88107250.8**

(22) Anmeldetag: **05.05.88**

(54) **Späneförderer.**

(30) Priorität: **01.06.87 DE 3718321**
**20.10.87 DE 3735402**

(43) Veröffentlichungstag der Anmeldung:
**07.12.88 Patentblatt 88/49**

(45) Bekanntmachung des Hinweises auf die
Patenterteilung:
**11.12.91 Patentblatt 91/50**

(84) Benannte Vertragsstaaten:
**DE ES FR GB IT**

(56) Entgegenhaltungen:
**DE-A- 2 223 813**   **DE-A- 2 912 789**
**FR-A- 2 351 246**   **US-A- 1 432 076**
**US-A- 1 804 423**   **US-A- 2 416 634**
**US-A- 3 866 743**

(73) Patentinhaber: **Gebr. Hennig GmbH**
**Dorfstrasse 41**
**W-8045 Ismaning(DE)**

(72) Erfinder: **Stöhr, Albert**
**Am Wiegenberg 8**
**W-8015 Markt(DE)**

(74) Vertreter: **Tetzner, Volkmar, Dr.-Ing. Dr. jur.**
**Van-Gogh-Strasse 3**
**W-8000 München 71(DE)**

## Beschreibung

Die Erfindung betrifft einen Späneförderer entsprechend dem Oberbegriff des Anspruches 1.

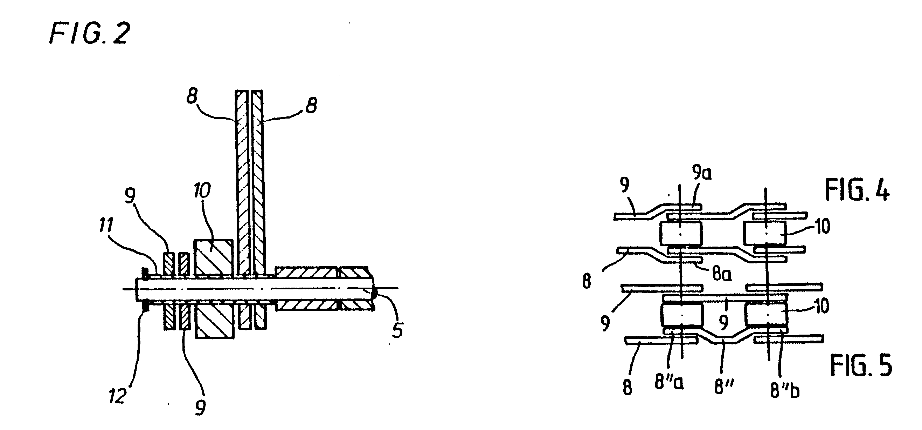

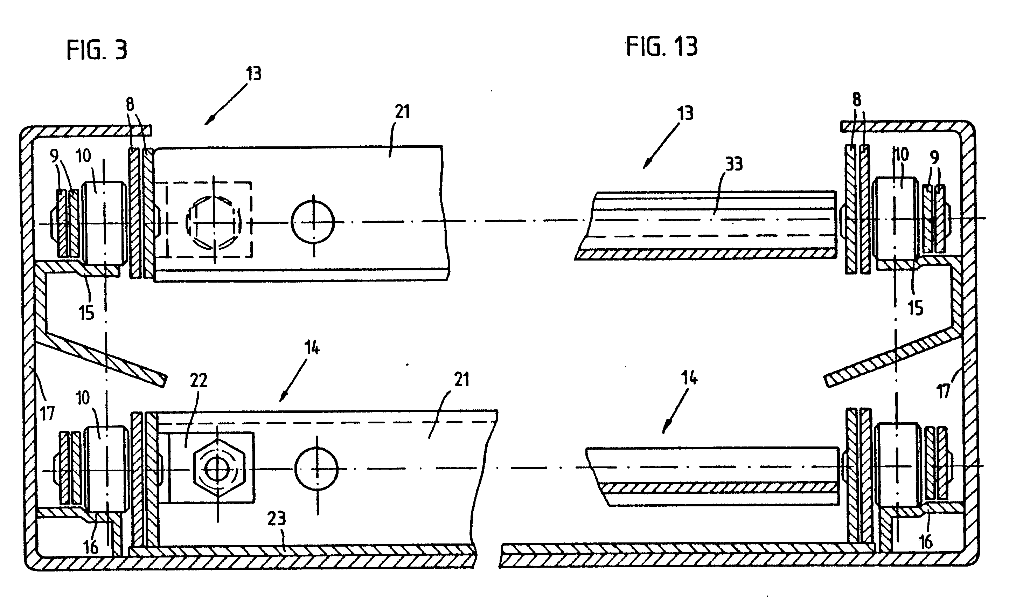

Aus der DE-A-22 23 813 ist ein Plattenbandförderer bekannt, der evtl. auch als Späneförderer eingesetzt werden kann und mit seinen rein konstruktiven Merkmalen etwa mit dem Förderer gemäß Oberbegriff des Anspruches 1 übereinstimmt. Betrachtet man in dieser Entgegenhaltung etwa die konstruktive Gestaltung des Plattenbandförderers (insbesondere gemäß Fig.2 und 3), dann erkennt man, daß dort die Innenlaschen mit ihrem oberen Rand den Außenumfang der dortigen Rollen überragen, während ihr unterer Rand etwa im mittleren Bereich zwischen Gelenkachse und ortsfesten Führungsschienen verläuft, auf denen die Laufrollen abrollen. Diese Laufrollen sind auf ihren dem Scharnierband zugewandten Enden mit flanschartigen Führungsbunden zur seitlichen Abstützung an den Führungsschienen versehen.

Der Erfindung liegt die Aufgabe zugrunde, einen Späneförderer der im Oberbegriff des Anspruches 1 vorausgesetzten Art so auszubilden, daß er sich durch einen einfachen konstruktiven Aufbau, eine große, für die Späneförderung nutzbare Breite des Scharnierbandes und eine ausgezeichnete Führung an dem ortsfesten Führungsprofil auszeichnet.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Einige Ausführungsbeispiele der Erfindung sind in der Zeichnung veranschaulicht. Es zeigen

| | |
|---|---|
| Fig.1 | eine Aufsicht auf einen erfindungsgemäßen Späneförderer, |
| Fig.2 | einen Schnitt längs der Linie II-II der Fig.1, |
| Fig.3 | einen Schnitt durch einen als Kratzerförderer ausgebildeten Späneförderer, |
| Fig.4 und 5 | Aufsichten auf zwei unterschiedlich ausgebildete Laschenketten, |
| Fig.6 und 7 | Teilaufsichten auf zwei weitere Varianten, |
| Fig. 8 | einen Schnitt durch ein weiteres Ausführungsbeispiel, |
| Fig. 9 bis 12 | Schnittdarstellung und Aufsichten auf ein weiteres Ausführungsbeispiel, |
| Fig. 13 | einen Schnitt durch ein als Bandförderer ausgebildetes Ausführungsbeispiel. |

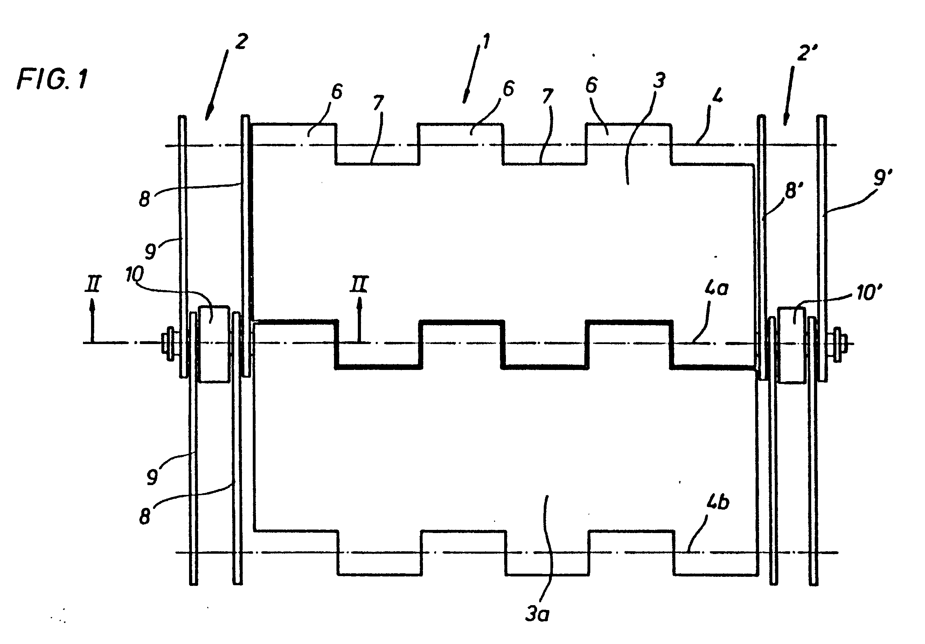

Der in den Fig. 1, 2 schematisch veranschaulichte Späneförderer besteht im wesentlichen aus einem Scharnierband 1 und zwei zu beiden Seiten des Scharnierbandes 1 angeordneten Laschenketten 2, 2'.

Das Scharnierband 1 setzt sich aus einzelnen Scharnierbandgliedern 3, 3a usw. zusammen, die im Bereich der Gelenkachsen 4, 4a, 4b usw. über Gelenkbolzen 5 schwenkgelenkig miteinander verbunden sind.

Die Scharnierbandglieder 3, 3a sind mit buchsenartigen Ansätzen 6 versehen, die zur Aufnahme des Gelenkbolzens 5 dienen und die zwischen sich Ausnehmungen 7 freilassen, in die die buchsenartigen Ansätze 6 des benachbarten Scharnierbandgliedes eingreifen.

Zur seitlichen Begrenzung der von den Scharnierbandgliedern 3, 3a gebildeten Späneförderbahn sind Seitenborde vorgesehen, die zugleich die inneren Laschen 8, 8' der beiden Laschenketten 2, 2' bilden.

Die Laschenketten 2, 2' enthalten außerdem äußere Laschen 9, 9' sowie Rollen 10, 10'.

Das Scharnierband 1 und die beiden Laschenketten 2, 2' weisen die gleiche Achsteilung auf und besitzen gemeinsame Gelenkbolzen 5. Im Bereich der Laschenketten 2, 2' sind dabei Buchsen 11 vorgesehen, durch die die Gelenkbolzen 5 hindurchgeführt und auf denen die Rollen 10, 10' gelagert sind. Der Zusammenhalt des Scharnierbandes 1 und der Laschenketten 2, 2' wird durch auf die Gelenkbolzen 5 aufgesetzte Sicherungsscheiben 12 gewährleistet.

Wie Fig. 2 erkennen läßt, besitzen die inneren Laschen 8, 8' der Laschenketten 2, 2' eine größere Höhe als die äußeren Laschen 9, 9' Auf diese Weise besitzt der Späneförderer das notwendige Fördervolumen.

Durch den Wegfall der bisher zusätzlich zu den Seitenborden des Scharnierbandes verwendeten inneren Laschen der beiden Laschenketten vergrößert sich die für die Späneförderung zur Verfügung stehende nutzbare Breite des Scharnierbandes 1. Zugleich vereinfacht sich der konstruktive Aufbau des Späneförderers, und es ergibt sich eine beachtliche Verringerung des Gewichts.

Bei dem Ausführungsbeispiel gemäß Fig. 3 ist der Späneförderer als Kratzerförderer ausgebildet. Er ist in einem Gehäuse 17 angeordnet, das je ein Führungsprofil 15 bzw. 16 für das obere und untere Trum des Späneförderers aufweist. Auf diesen Führungsprofilen laufen die Rollen 10 des Späneförderers.

Die inneren Laschen 8 stehen sowohl auf der Oberseite als auch auf der Unterseite des Scharnierbandes über die Rollen 10 nach oben bzw. unten vor. Sie können daher sowohl im Obertrum 13 als auch im Untertrum 14 des Späneförderers zur seitlichen Lagebegrenzung des Späneförderers gegenüber dem ortsfesten Führungsprofil 15 bzw.

16 dienen.

Bei dem als Kratzerförderer ausgebildeten Späneförderer gemäß Fig. 3 sind die einzelnen Scharnierbandglieder mit Kratzerstegen 21 versehen, die über Winkellaschen 22 mit den inneren Laschen 8 verbunden sind und deren Höhe der Höhe der inneren Laschen 8 entspricht. Im Bereich des Untertrums 14 streifen die Kratzerstege 21 demgemäß auf einem am Boden des Gehäuses 17 angeordneten ortsfesten Verschleißband 23 und fördern die auf diesem Verschleißband 23 liegenden Späne.

Bei dem Ausführungsbeispiel gemäß Fig. 1 sind die inneren und äußeren Laschen 8, 9 eben ausgebildet. Die Fig. 4 und 5 zeigen demgegenüber zwei weitere Varianten der Ausbildung der Laschenketten: Gemäß Fig. 4 besitzen die inneren und äußeren Laschen 8, 9 eine der Laschenstärke entsprechende Abkröpfung 8a bzw. 9a. Bei dem Ausführungsbeispiel gemäß Fig. 5 sind die inneren Laschen 8, 8″ abwechselndgerade bzw. an beiden Enden mit einer Abkröpfung 8″a, 8″b versehen. Die äußeren Laschen 9 sind bei diesem Ausführungsbeispiel sämtlich gerade ausgebildet.

Bei Verwendung gekröpfter Laschen ergeben sich im Bereich der Abkröpfungen Anschlagzonen, die die Relativschwenkbewegung benachbarter Scharnierbandglieder und damit den minimalen Krümmungsradius des Scharnierbandes bestimmen.

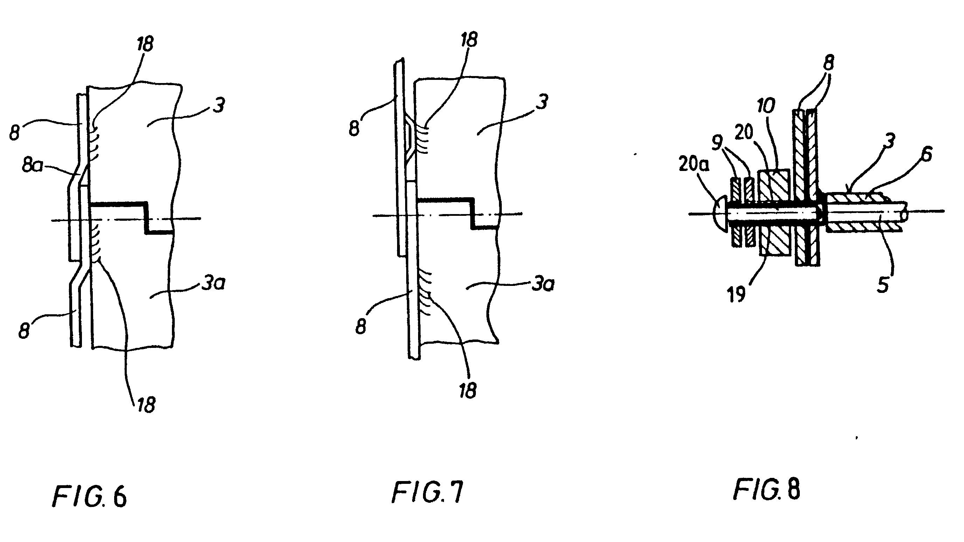

Fig. 6 veranschaulicht ein Ausführungsbeispiel, bei dem die Scharnierbandglieder 3, 3a mit den inneren Laschen 8 des Scharnierbandes 1 fest verbunden, vorzugsweise verschweißt sind (Schweißnähte 18).

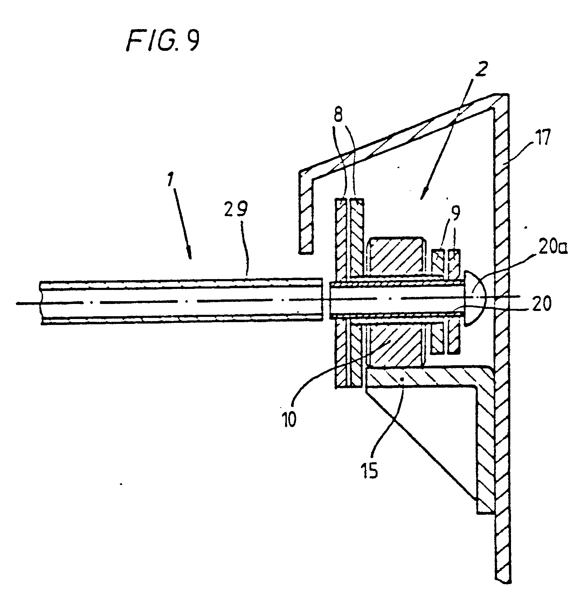

Während Fig. 6 eine Variante mit gekröpften Laschen zeigt, veranschaulicht Fig. 7 eine Ausführung, bei der die inneren Laschen 8 eben ausgestaltet und gleichfalls mit den Scharnierbandgliedern 3, 3a durch Verschweißen (Schweißnähte 18) fest verbunden sind.

Während bei dem Ausführungsbeispiel gemäß den Fig. 1 und 2 das Scharnierband 1 und die beiden Laschenketten 2, 2′ gemeinsame, durchgehende Gelenkbolzen 5 aufweisen, zeigt Fig. 8 ein Ausführungsbeispiel, bei dem die Gelenkbolzen 5 nur eine Breite besitzen, die maximal der Breite des Scharnierbandes 1 entspricht; sie ragen also seitlich nicht über die Scharnierbandglieder 3, 3a hinaus. Die Scharnierbandglieder 3, 3a sind mit den inneren Laschen 8, 8′ verschweißt. Die inneren und äußeren Laschen 8, 8′, 9, 9′ sowie die Rollen 10, 10′ der beiden Laschenketten 2, 2′ sind auf gesonderten Buchsen 19 gelagert, die in axialer Verlängerung der Gelenkbolzen 5 angeordnet sind.

Die Gelenkbolzen 5 können nach dem Verschweißen der Scharnierbandglieder 3, 3a mit den inneren Laschen 8, 8′ durch Verpressen der die Gelenkbolzen 5 umgebenden buchsenartigen Ansätze 6 der Scharnierbandglieder gegen axiale Verschiebung gesichert werden.

Eine andere, in der Zeichnung veranschaulichte Möglichkeit besteht darin, zur axialen Lagesicherung des Gelenkbolzens 5 einen Kunststoffbolzen 20 in die Buchse 19 einzuschlagen. Der nach außen vorstehende Kopf 20a dieses Kunststoffbolzens 20 kann zugleich zur Begrenzungsführung für den Späneförderer verwendet werden und zu diesem Zweck mit einer ortsfesten Führungsbahn zusammenwirken.

Bei dem in den Fig. 9 bis 12 dargestellten weiteren Ausführungsbeispiel der Erfindung ist das Scharnierband 1 ohne Gelenkbolzen ausgebildet.

Das Scharnierband 1 besteht aus einzelnen, gleichartig ausgebildeten Scharnierbandgliedern 29, deren mittlerer Bereich 29a mit Durchbrüchen 30 versehen ist, durch die an den geförderten Spänen anhaftende Flüssigkeit abtropfen kann. An den beiden quer zur Förderrichtung (Pfeil 31, Fig. 11) verlaufenden Kanten weisen die Scharnierbandglieder 29 Gelenkachsteile 29b, 29c auf, die über die ganze Breite des Scharnierbandes 1 durchlaufen. Der Gelenkachsteil 29b ist mit einer teilzylindrischen Außenfläche 29b′ und der Gelenkachsteil 29c mit einer komplementär ausgebildeten, teilzylindrischen Innenfläche 29c′ versehen. Benachbarte Scharnierbandglieder 29 greifen dabei in der aus Fig. 11 ersichtlichen Weise in- bzw. übereinander.

Der Achsabstand a zwischen den Gelenkachsteilen 29b, 29c der einzelnen Scharnierbandglieder 29 entspricht dem Achsabstand b der Laschenketten 2, 2′, wobei die Gelenkachsen von Scharnierband 1 und Laschenketten 2, 2′ in ihrer Lage zusammenfallen.

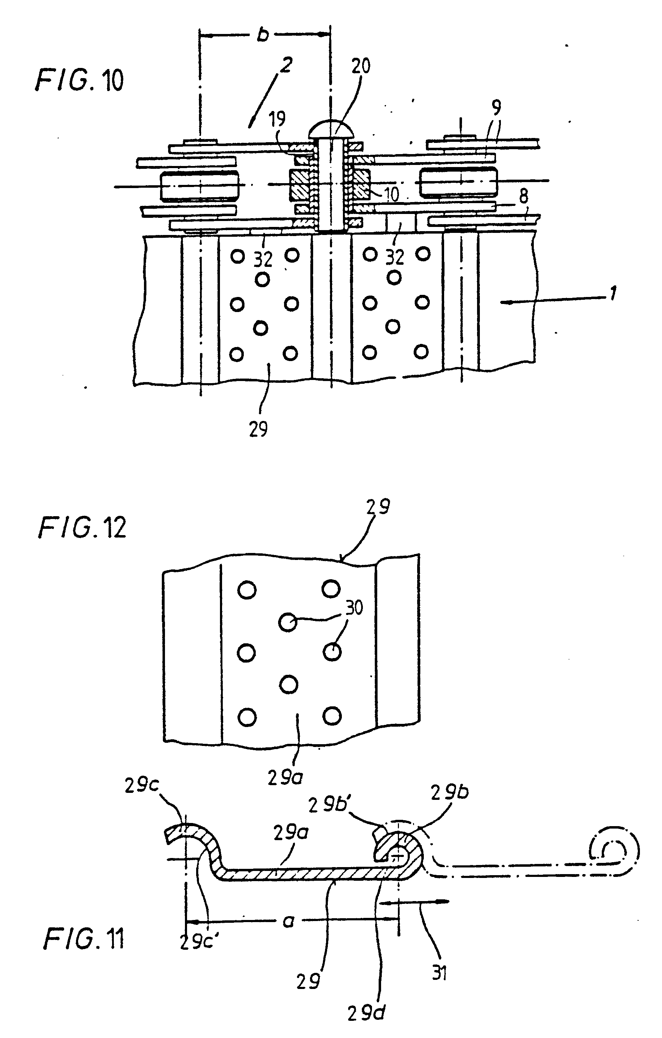

Die Scharnierbandglieder 29 sind mit der ihnen benachbarten inneren Lasche 8 verbunden, beispielsweise durch Verschweißen, Verschrauben oder Vernieten. In Fig. 10 sind zur Verbindung der Scharnierbandglieder 29 mit den Laschen 8 dienende Ansätze 32 schematisch angedeutet.

Auch bei diesem Ausführungsbeispiel bilden damit die inneren Laschen 8 der beiden Laschenketten zugleich die Seitenborde des Scharnierbandes 1.

In den Buchsen 19 der Laschenketten sind auch bei diesem Ausführungsbeispiel Kunststoffbolzen 20 angeordnet, deren Kopf 20a zur seitlichen Lagebegrenzung des Späneförderers innerhalb des Gehäuses 17 dienen kann, und zwar zusätzlich zu der seitlichen Lagebegrenzung, die durch die am Führungsprofil 15 bzw. 16 zur Anlage kommenden inneren Laschen 8 erfolgt.

Wie die Fig. 3 und 13 erkennen lassen, werden im übrigen auch die Führungsprofile 15, 16 gestuft ausgebildet, so daß sich eine weitere seitliche Lagebegrenzung durch die mit den Rollen 10 zusammenwirkenden Stufen in den Führungsprofilen 15, 16 ergibt.

Der erfindungsgemäße Späneförderer kann unter Verwendung derselben Grundbestandteile und unter Benutzung desselben Gehäuses je nach dem gewünschten Verwendungszweck in zwei verschiedenen Ausführungsformen hergestellt bzw. vom Benutzer auf einfache Weise umgebaut werden:

- Einerseits als Kratzerförderer (Fig. 3), dessen Kratzerstege 21 nach unten weisen und mit dem Gehäuseboden zusammenwirken,
- andererseits als Bandförderer (Fig. 13), der in umgekehrter Drehrichtung betrieben wird und dessen mit geeigneten Mitnehmerrippen 33 versehenes Scharnierband im Obertrum 13 die Späne fördert.

Ein Vergleich der Fig. 3 und 13 zeigt, daß das Gehäuse 17 und die Führungsprofile 15, 16 derart ausgebildet sind, daß wahlweise ein Kratzerförderer (Fig. 3) oder ein Bandförderer (Fig. 13) verwendet werden kann, wobei jeweils eine gleich gestaltete Laschenkette Verwendung findet.

**Patentansprüche**

1. Späneförderer, bestehend aus einem mit zwei Seitenborden versehenen Scharnierband (1) sowie zwei ausserhalb der Seitenborde angeordneten Laschenketten (2, 2'), wobei das Scharnierband und die beiden Laschenketten gleiche Achsteilung aufweisen, die Seitenborde des Scharnierbandes zugleich die inneren Laschen (8, 8') der beiden Laschenketten bilden und diese inneren Laschen der beiden Laschenketten eine größere Höhe als die beiden äußeren Laschen (9, 9') aufweisen, wobei ferner zwischen den inneren und äußeren Laschen der Laschenketten Rollen (10) vorgesehen sind, die auf einem ortsfesten Führungsprofil (15, 16) laufen,

dadurch gekennzeichnet,

daß die Höhe der die inneren Laschen der beiden Laschenketten bildenden Seitenborde (8, 8') des Scharnierbandes (1) in der Weise größer ist als die Höhe der Rollen (10), daß die Seitenborde (8, 8') sowohl auf der Oberseite als auch auf der Unterseite des Scharnierbandes (1) über die Rollen (10) nach oben und unten vorstehen und im Unter- und Obertrum (14 bzw. 13) des Scharnierbandes zur seitlichen Lagebegrenzung des Späneförderers gegenüber dem ortsfesten Führungsprofil (15, 16) dienen.

2. Späneförderer nach Anspruch 1, bei dem die Seitenborde (8, 8') des Scharnierbandes (1) gegenüber den Scharnierbandgliedern (3, 3a) lose angeordnet sind, dadurch gekennzeichnet, daß das Scharnierband (1) und die beiden Laschenketten (2, 2') gemeinsame, durchgehende Gelenkbolzen (5) aufweisen.

3. Späneförderer nach Anspruch 1, dadurch gekennzeichnet, daß die Scharnierbandglieder (3, 3a) mit den Seitenborden (8, 8') des Scharnierbandes (1) fest verbunden, vorzugsweise verschweißt sind.

4. Späneförderer nach Anspruch 3, bei dem die Scharnierbandglieder (3, 3a) über Gelenkbolzen (5) miteinander verbunden sind, dadurch gekennzeichnet, daß die Gelenkbolzen (5) maximal die Breite des Scharnierbandes (1) aufweisen und die Laschen (8, 8', 9, 9') sowie Rollen (10, 10') der Laschenketten (2, 2') auf gesonderten Buchsen (19) gelagert sind.

5. Späneförderer nach Anspruch 4, dadurch gekennzeichnet, daß die Gelenkbolzen (5) nach dem Verschweißen der Scharnierbandglieder (3, 3a) mit den Seitenborden (8, 8') durch Verpressen eines den Gelenkbolzen umgebenden buchsenartigen Ansatzes (6) gegen axiale Verschiebung gesichert sind.

6. Späneförderer nach Anspruch 4, dadurch gekennzeichnet, daß die Gelenkbolzen (5) durch in die Buchsen (19) eingeschlagene Kunststoffbolzen (20) gegen axiale Verschiebung gesichert sind.

7. Späneförderer nach Anspruch 6, dadurch gekennzeichnet, daß der abgerundete Kopf (20a) dieser Kunststoffbolzen (20) über die Buchsen (19) nach außen vorsteht und eine Begrenzungsführung für den Späneförderer bildet.

8. Späneförderer nach Anspruch 1, dadurch gekennzeichnet, daß die Scharnierbandglieder (29) an ihren quer zur Förderrichtung verlaufenden Kanten über die ganze Breite des Scharnierbandes durchlaufende Gelenkachsteile (29b, 29c) aufweisen, von denen der eine mit einer teilzylindrischen Außenfläche (29b') und der andere mit einer komplementär ausgebildeten, teilzylindrischen Innenfläche (29c') versehen ist.

9. Späneförderer nach Anspruch 1, dadurch gekennzeichnet, daß das Gehäuse (17) und die Führungen (15, 16) für die Laschenketten (2, 2') derart ausgebildet sind, daß als Späneförderer wahlweise ein Kratzerförderer oder ein Bandförderer - mit jeweils gleich gestalteter Laschenkette - verwendbar ist.

**10.** Späneförderer nach Anspruch 1, dadurch gekennzeichnet, daß die inneren und äußeren Laschen (8, 8′, 9, 9′) eben ausgebildet sind.

**11.** Späneförderer nach Anspruch 1, dadurch gekennzeichnet, daß die inneren und äußeren Laschen (8, 8′, 9, 9′) eine der Laschenstärke entsprechende Abkröpfung (8a, 9a) aufweisen.

**12.** Späneförderer nach Anspruch 1, dadurch gekennzeichnet, daß die inneren Laschen (8, 8″) abwechselnd gerade bzw. an beiden Enden gekröpft und die äußeren Laschen (9) sämtlich gerade ausgebildet sind.

**Claims**

**1.** Shavings conveyor consisting of a hinged belt (1) provided with two rims and two side plate chains (2, 2′ ) arranged outside the rims, in which the hinged belt and the two side plate chains have the same axial pitch, the rims of the hinged belt at the same time form the inner side plates (8, 8′) of the two side plate chains and these inner side plates of the two side plate chains have a greater height than the two outer side plates (9, 9′), and in which rollers (10) which run on a stationary guide profile (15, 16) are provided between the inner and outer side plates of the side plate chains, characterised in that the height of the rims (8, 8′) of the hinged belt (1) forming the inner side plates of the two side plate chains is greater than the height of the rollers (10) in such a way that the rims (8, 8′) project upwards and downwards over the rollers (10) both on the upper surface and the lower surface of the hinged belt (1) and in the lower or upper run (14 or 13) of the hinged belt serve for lateral definition of the position of the shavings conveyor with respect to the stationary guide profile (15, 16).

**2.** Shavings conveyor as claimed in claim 1, in which the rims (8, 8′) of the hinged belt (1) are arranged loosely opposite the hinged belt members (3, 3a), characterised in that the hinged belt (1) and the two side plate chains (2, 2′) have common joint bolts (5) passing through them.

**3.** Shavings conveyor as claimed in claim 1, characterised in that the hinged belt members (3, 3a) are firmly connected, preferably welded, to the rims (8, 8′) of the hinged belt (1).

**4.** Shavings conveyor as claimed in claim 3, in which the hinged belt members (3, 3a) are connected to one another by joint bolts (5), characterised in that the joint bolts (5) have a maximum width equal to the width of the hinged belt (1) and the side plates (8, 8′, 9, 9′) and rollers (10, 10′) of the side plate chains (2, 2′) are mounted on separated bushes (19).

**5.** Shavings conveyor as claimed in claim 4, characterised in that after the hinged belt members (3, 3a) have been welded to the rims (8, 8′) the joint bolts (5) are secured against axial displacement by pressing a bush-like projection (6) which surrounds the joint bolt.

**6.** Shavings conveyor as claimed in claim 4, characterised in that the joint bolts (5) are secured against axial displacement by plastic bolts (20) driven into the bushes (19).

**7.** Shavings conveyor as claimed in claim 6, characterised in that the rounded head (20a) of this plastic bolt (20) projects outwards over the bushes (19) and forms a limiting guide for the shavings conveyor.

**8.** Shavings conveyor as claims in claim 1, characterised in that on their edges running at right angles to the conveying direction the hinged belt members (29) have joint axis parts (29b, 29c) which extend over the entire width of the hinged belt and of which one is provided with a part-cylindrical outer surface (29b′) and the other with a part-cylindrical inner surface (29c′) of complementary construction.

**9.** Shavings conveyor as claimed in claim 1, characterised in that the housing (17) and the guides (15, 16) for the side plate chains (2, 2′) are constructed in such a way that a scraper conveyor or a conveyor- belt can be used as required as a shavings conveyor - with side plate chains of the same construction being used in either case.

**10.** Shavings conveyor as claimed in claim 1, characterised in that the inner and outer side plates (8, 8′, 9, 9′ ) are of flat construction.

**11.** Shavings conveyor as claimed in claim 1, characterised in that the inner and outer side plates (8, 8′, 9, 9′ ) have a bend (8a, 9a) corresponding to the thickness of a side plate.

**12.** Shavings conveyor as claimed in claim 1, characterised in that the inner side plates (8, 8″) are alternately straight or bent at both ends and the outer side plates (9) are all of straight construction.

**Revendications**

1. Convoyeur à copeaux se composent d'un transporteur à charnières (1) qui est équipé de deux plaquettes latérales, ainsi que de deux chaînes articulées (2, 2') disposées à l'extérieur des plaquettes latérales, le transporteur à charnières et les deux chaînes articulées ayant le même entre-axes, les plaquettes latérales du transporteur à charnières formant également les maillons intérieurs (8, 8') des deux chaînes articulées et ces maillons intérieurs des deux chaînes articulées ayant une hauteur supérieure à celle des deux maillons extérieurs (9, 9') et par ailleurs des galets (10), qui roulent sur un profilé fixe de guidage (15, 16), étant prévus entre les maillons intérieurs et les maillons extérieurs des chaînes articulées, caractérisé en ce que la hauteur des plaquettes latérales (8, 8') du transporteur à charnières (1) qui forment les maillons intérieurs des deux chaînes articulées est supérieure à celle des galets (10) de manière telle que les plaquettes latérales (8, 8') dépassent des galets (10) vers le haut et vers le bas, aussi bien du côté supérieur que du côte inférieur du transporteur à charnières (1), et servent à positionner latéralement le convoyeur à copeaux vis à vis du profilé fixe de guidage (15, 16) aussi bien sur le brin inférieur que le brin supérieur (14 ainsi que 13) du transporteur à charnières.

2. Convoyeur à copeaux selon le revendication 1, dans lequel les plaquettes latérales (8, 8') du transporteur à charnières (1) sont disposées sans attache avec les éléments (3, 3a) du transporteur à charnières, caractérisé en ce que le transporteur à charnières (1) et les deux chaînes articulées (2, 2') ont des arbres d'articulation communs continus (5).

3. Convoyeur à copeaux selon la revendication 1, caractérisé en ce que les éléments (3, 3a) du transporteur à charnières sont solidarisés avec les plaquettes latérales (8, 8') du transporteur à charnières (1) et de préférence sont soudés.

4. Convoyeur à copeaux selon la revendication 3, dans lequel les éléments (3, 3a) du transporteur à charnières sont reliés les uns aux autres par des arbres d'articuletion (5), caractérisé en ce que les arbres d'articulation (5) ont au maximum la largeur du transporteur à charnières (1) et les maillons (8, 8', 9, 9') ainsi que les galets (10, 10') des chaînes articulées (2, 2') sont montés sur des manchons indépendants (19).

5. Convoyeur à copeaux selon la revendication 4, caractérisé en ce qu'après soudage des éléments (3, 3a) du transporteur à charnières sur les plaquettes latérales (8, 8') les arbres d'articulation (5) sont arrêtés et empêchés de se déplacer axialement par compression d'une protubérance (6) en forme de manchon qui entoure l'arbre d'articulation.

6. Convoyeur à copeaux selon le revendication 4, caractérisé en ce que l'arbre d'articulation (5) est arrêté et empêché de se déplacer axialement par une cheville de matière plastique (20) qui est chassée dans les manchons (19).

7. Convoyeur à copeaux selon la revendication 6, caractérisé en ce que la tête arrondie (20a) desdites chevilles de matière plastique (20) ressortent extérieurement des manchons (19) et forment un guide de positionnement du convoyeur à copeaux.

8. Convoyeur à copeaux selon la revendication 1, caractérisé en ce que les bords des éléments (29) du transporteur à charnières qui sont orientés transversalement par rapport à la direction de convoyage comportent sur la largeur totale du transporteur à charnières des parties continues (29b, 29c) formant des axes d'articulation et dont l'une présente une surface extérieure partiellement cylindrique (29b') tandis que l'autre comporte une surface intérieure partiellement cylindrique (29c') qui est complémentaire de la précédente.

9. Convoyeur à copeaux selon la revendication 1, caractérisé en ce que l'enveloppe (17) et les guides (15, 16) des chaînes articulées (2, 2') sont conformés de manière que le convoyeur à copeaux soit utilisable sélectivement en convoyeur à raclettes ou en transporteur à ruban -dans chaque cas avec des chaînes articulées identiques-.

10. Convoyeur à copeaux selon la revendication 1 caractérisé en ce que les maillons intérieurs et extérieurs (8, 8', 9, 9') sont plans.

11. Convoyeur à copeaux selon la revendication 1, caractérisé en ce que les maillons intérieurs et extérieurs (8, 8', 9, 9') comportent un coude (8a, 9a) correspondant à l'épaisseur des maillons.

12. Convoyeur à copeaux selon la revendication 1, caractérisé en ce que les maillons intérieurs (8, 8") sont en alternance rectilignes et coudés aux deux extrémités et tous les maillons extérieurs (9) sont rectilignes.

FIG.1

FIG.4

FIG.5

FIG.2

FIG. 3

FIG. 13

EP 0 293 625 B1

FIG.8

FIG.7

FIG.6

FIG. 9

*FIG.*10

*FIG.*12

*FIG.*11